# EUROPÄISCHE PATENTANMELDUNG

(11) **EP 2 905 116 A1**
(43) Veröffentlichungstag der Anmeldung: **12.08.2015**
(21) Anmeldenummer: 14154644.0
(22) Anmeldetag: 11.02.2014
(51) Int. Cl.: B29C 44/26, B29C 33/68, B29C 44/32, B29C 44/56, B29K 75/00

(54) **Verfahren zur Herstellung von Polyurethan-Sandwichelementen**

(71) Anmelder: Bayer MaterialScience AG, 51373 Leverkusen (DE)
(72) Erfinder: Dr. Rothe, Bernd, 50668 Köln (DE); Symannek, Achim, 42799 Leichlingen (DE); Dr. Franken, Klaus, 51467 Bergisch Gladbach (DE); Brüning, Dirk, 51377 Leverkusen (DE)
(74) Vertreter: BIP Patents

(57) **Zusammenfassung**

Die Erfindung betrifft ein Verfahren und eine Vorrichtung zur Herstellung von mehrschichtigen Verbundelementen (S) aus Polyurethan, welche mindestens aus einer unteren Deckschicht (D1), einer oberen Deckschicht (D2), aus einer geschäumten Kernschicht sowie aus einer über der Kernschicht liegenden Zwischenschicht und einer unter der Kernschicht liegenden Zwischenschicht aufgebaut sind, wobei die Zwischenschichten aus der Spaltung einer ersten geschäumten Kernschicht (K1) entstanden sind.

## Beschreibung

Die Erfindung betrifft ein Verfahren zur Herstellung von mehrschichtigen Verbundelementen aus Polyurethan, welche mindestens aus einer unteren Deckschicht, einer oberen Deckschicht, aus einer geschäumten Kemschicht sowie aus einer über der Kemschicht liegenden Zwischenschicht und einer unter der Kemschicht liegenden Zwischenschicht aufgebaut sind, wobei die Zwischenschichten aus der Spaltung einer ersten geschäumten Kemschicht entstanden sind.

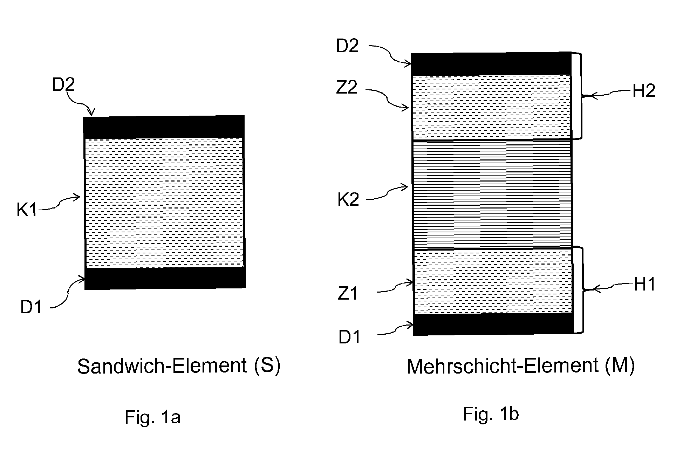

Die Herstellung von Polyurethan-Sandwichelementen (Paneelen) erfolgt im Allgemeinen in einem kontinuierlichen Prozess, wobei die Paneele endlos in einer sogenannten "Doppelband-Transportanlage" (DTB) in Dicken von in der Regel ca. 20 bis 200 mm hergestellt werden. Dicken von unter 20 mm und über 200 mm sind aber ebenfalls möglich. Das DTB besteht üblicherweise aus einem umlaufenden Oberband zur Führung der oberen Deckschicht, einem umlaufenden Unterband zur Führung der unteren Deckschicht, einer Zuführeinrichtung für die obere Deckschicht, einer Zuführeinrichtung für die untere Deckschicht, einer Formstrecke, innerhalb derer das Polyurethan-Reaktionsgemisch zwischen der oberen Deckschicht und der unteren Deckschicht aufschäumt und ausreagiert, einer Ablängeinrichtung für das hergestellte Paneel sowie einer Dosierstation mit einem Mischkopf zum Auftragen der Polyurethan-Reaktionsmischung auf die untere Deckschicht. Ein DTB nach dem Stand der Technik ist beispielsweise in Figur 1 der EP 1 518 654 A dargestellt oder auch in der deutschen Offenlegungsschrift DE 2232976 bzw. der dort zitierten Literatur beschrieben.

EP 1 518 654 A beschreibt eine Modifikation dieses Standardverfahrens, bei dem die Polyurethan - Schicht sowohl auf die Oberseite der unteren Deckschicht als auch auf die Unterseite der oberen Deckschicht aufgetragen wird. Mit diesem Verfahren sollen sich Sandwich - Paneels herstellen lassen, bei denen die geschäumte Polyurethan-Kernschicht eine besonders niedrige Rohdichte besitzt. Die Sprühapplikation auf die Unterseite der oberen Deckschicht hat jedoch den Nachteil, dass Overspray nicht zu vermeiden ist (Overspray ist der Anteil des verspritzten Materials, welcher in Form von Sprühnebel in die Umgebung entweicht).

Aus der EP 1 516 720 B1 ist ein Verfahren zur Herstellung von Sandwich-Verbundelementen bekannt, die eine erste Deckschicht und eine zweite Deckschicht aufweisen, und zwischen den Deckschichten ist ein Polyurethan-Schaumkernkörper angeordnet. Der Polyurethan-Schaumkernkörper wird durch Auftrag eines aufschäumenden Reaktionsgemisches auf eine der Deckschichten bereitgestellt. Um die Haftung zwischen dem durch das aufschäumende Reaktionsgemisch hergestellten Polyurethan-Schaumkernkörpers und den Deckschichten zu verbessern, wird vorgeschlagen, auf die Innenseite der Deckschichten einen Haftvermittler auf Polyurethanbasis aufzubringen.

Neben den bereits erwähnten beiden Deckschichten, gegebenenfalls Haftvermittlerschichten und einer Polyurethan-Kernschicht kann die Anwesenheit von weiteren Schichten im Paneel wünschenswert sein, um zusätzliche Funktionalitäten einzuführen. Im Sinne dieser Anmeldung werden solche Paneele, welche sich von den einfachen Sandwich-Paneelen durch die Anwesenheit weiterer geschäumter Polyurethanschichten unterscheiden, "Mehrschicht-Elemente" genannt.

Bei dem Mehrschicht-Element (M) handelt es sich um eine Platte enthaltend mehrere miteinander fest verbundene Schichten, welche mindestens aus einer unteren Deckschicht, einer oberen Deckschicht, aus einer geschäumten Kemschicht sowie aus einer über der Kemschicht liegenden Zwischenschicht und einer unter der Kemschicht liegenden Zwischenschicht aufgebaut ist, wobei die Zwischenschichten aus der Spaltung einer ersten geschäumten Kemschicht entstanden sind.

Es fehlt jedoch bisher ein technisch einfaches und wirtschaftlich sinnvolles Verfahren zur kontinuierlichen Herstellweise für die beschriebenen Mehrschicht-Elemente M enthaltend mehrere geschäumte Polyurethan-Schichten.

Die Aufgabe der vorliegenden Erfindung besteht daher darin, ein einfaches und wirtschaftliches Verfahren und eine geeignete Vorrichtung zur Herstellung eines Mehrschicht-Elements M zur Verfügung zu stellen.

Diese Aufgabe wird durch das erfindungsgemäße Verfahren zur Herstellung von Mehrschicht-Elementen gemäß dem Oberbegriff des Anspruchs 1 mit den kennzeichnenden Merkmalen gelöst. Für das erfindungsgemäße Verfahren lässt sich vorteilhafterweise eine Vorrichtung gemäß Anspruch 3 einsetzen. Vorteilhafte Weiterbildungen der Erfindung sind in den abhängigen Ansprüchen angegeben.

Die Erfindung betrifft ein Verfahren zur kontinuierlichen Herstellung von Mehrschicht-Elementen M enthaltend eine untere Deckschicht D1 und eine obere Deckschicht D2 und mindestens drei dazwischen liegende, verbundene Schichten (Z1, K2 und Z2), aus geschäumten Polyurethan bei dem
a) in einem ersten Schritt ein aus dem Stand der Technik bekanntes Sandwich-Paneel S, mindestens enthaltend eine obere Deckschicht D2, eine untere Deckschicht D1 und eine geschäumte Kemschicht K1 hergestellt wird;
b) in einem zweiten, an den Schritt a) anschließenden Schritt das Sandwich-Paneel S in zwei Schichten H1 und H2 getrennt wird durch eine Spaltung der Kemschicht K1 in zwei Schichten Z1 und Z2, und
c) in einem dritten Schritt
   ca) die beiden Schichten H1 und H2 als neue Deckschichten in eine sich anschließende DTB-Anlage eingeführt werden und
   cb) ein Polyurethan-System PUR2 von oben auf die Oberseite der unteren Schicht H1 aufgetragen wird, und
   cc) anschließend die Schichten H1 und H2 mit dem aufgetragenen Polyurethan-System PUR2 in einer Formstrecke geführt werden, in der die Dicke des Polyurethan-Mehrschicht-Elements eingestellt wird und in der das Polyurethan-System PUR2 zur Kemschicht K2 ausreagiert,
   anschließend das ausreagierte Polyurethan-Mehrschicht-Element M abgezogen und abgelängt wird.

Die Schritte a, b, c und d) erfolgen bevorzugt in einer solchen Weise, dass der sequentielle Aufbau des Mehrschicht - Elements M kontinuierlich in Längsrichtung erfolgt.

In einer bevorzugten Ausführungsform wird das Polyurethan-Sandwich-Paneel S mit dem aus der Stand der Technik bekannten DTB-Verfahren hergestellt, bei dem
aa) die beiden Deckschichten D1 und D2 kontinuierlich in Längsrichtung gefördert werden, so dass zwischen den Deckschichten ein in Längsrichtung der Deckschichten ausgedehnter Spalt entsteht, und
ab) ein Polyurethan-System PUR1 von oben auf die Oberseite der unteren Deckschicht und gegebenenfalls von unten auf die Unterseite der oberen Deckschicht anteilig aufgetragen wird, und
ac) anschließend die Deckschichten mit dem Polyurethan-System PUR1 in einer Formstrecke geführt werden, in der die Dicke des Polyurethan-Sandwich-Paneels S eingestellt wird und in der das Polyurethan-System PUR1 zu einer ersten geschäumten Kemschicht K1 ausreagiert, und das ausreagierte Paneel S abgezogen und in die Spalteinrichtung geführt wird.

Eine beispielhafte Ausführungsform eines solchen Mehrschicht-Elements M ist in Figur 1b) dargestellt. Es bedeuten D1 die untere Deckschicht und D2 die obere Deckschicht. Zwischen den beiden Deckschichten liegen mindestens eine geschäumte Kemschicht K2, die unterhalb der Kemschicht K2 liegende Zwischenschicht Z1 sowie die oberhalb der Kemschicht liegende Zwischenschicht Z2, wobei die Schichten Z1 und Z2 aus der Spaltung einer ersten Kemschicht K1 eines Sandwich-Elementes S entstanden, welches beispielhaft in Figur 1a) dargestellt ist.

In einer bevorzugten Ausführungsform sind sowohl die Schichten Z1 und Z2 als auch die Schicht K2 aus geschäumten Polyurethan.

Die möglichen Ausführungsformen des Mehrschicht-Elements M bzw. des Sandwich-Paneels S schließen solche mit ein, bei denen eine oder beide Deckschichten D1 und/oder D2 selber aus mehreren Schichten bestehen, oder aber die Deckschichten D1 und/oder D2 vor der Herstellung des Sandwich-Paneels noch mit einer zusätzlichen Schicht (z.B. durch Sprühen oder Tauchen) versehen werden. Als Beispiel ist das Versehen mit einer Haftvermittlerschicht HV zu nennen, wie es auch im Stand der Technik beschrieben wird. Beispielsweise können aber auch Unterdeckschichten enthaltend Matten, Gelege, Gewirke aus Glas-, Kunststoff-, Kohlenstoff- oder Naturstofffasern im Mehrschicht-Element verwendet werden.

Bevorzugt besitzt das Mehrschicht-Element M die Schichtfolge D1-(HV)-Z1-K2-Z2-(HV)-D2.

Um eine gute Spaltung der Kemschicht K1 zu gewährleisten, muss diese vor der Spaltung eine gewisse Mindestdicke aufweisen. Die Mindestdicke liegt bevorzugt bei 10 mm und besonders bevorzugt bei 30 mm. Durch den Verfahrensschritt der Spaltung der Kemschicht K1 ist es zwingend notwendig, dass das mehrschichtige Produkt des erfindungsgemäßen Verfahrens über zwei in ihrer chemischen Zusammensetzung identische Schichten Z1 und Z2 verfügt.

Die im erfindungsgemäßen Verfahren vorgesehene Spaltung der Kemschicht K1 erfolgt zu einem Zeitpunkt, an dem die Polyurethanschicht K1 ausreagiert und stabil, jedoch noch verformbar ist. Dieser Zeitpunkt wird durch die Parameter Reaktionsgeschwindigkeit von PUR1, Transportgeschwindigkeit des Sandwich-Paneels S und Abstand zwischen Vorrichtung zur Herstellung von S und der Spalteinrichtung festgelegt. Die Einstellung dieser Parameter werden zu Beginn des Verfahrens durchgeführt.

Zur Spaltung der Schicht K1 kann eine stehende Klinge, eine Säge, ein Draht oder ein anderes Säge-/ Schneid-/ oder Spaltwerkzeug verwendet werden. Die Spaltung erfolgt in horizontaler Richtung parallel zur unteren Deckschicht D1. Eine Mindestdicke von 5 mm pro Schicht Z1 bzw. Z2 sollte hierbei eingehalten werden. Die Spaltung der beiden Schichten muss nicht genau mittig erfolgen, somit können die resultierenden Schichten Z1 und Z2 bzw. die beiden Schichten H1 und H2 unterschiedliche Dicken aufweisen. Nach der Spaltung werden Staub und andere Verunreinigungen beispielsweise durch ein Gebläse von den beiden Oberflächen der entstandenen Schichten Z1 und Z2 entfernt. Die untere Schicht H1 wird horizontal weiter transportiert und die obere Schicht wird über eine Führung soweit von der unteren Schicht entfernt, dass die zweite Kemschicht K2 eingetragen werden kann.

Die Polyurethan-Schichten K1 und K2 können jeweils aus einem aufschäumenden Reaktionsgemisch enthaltend die Polyurethan-Systeme PUR1 bzw. PUR2 gebildet werden, welche wenigstens aus den zusammengeführten Mischkomponenten Isocyanat und Polyol bereitgestellt werden und einen PUR- und/oder einen PIR-Schaum bilden. Die Mischkomponenten werden vorzugsweise in einem Mischkopf zusammengeführt.

Die in den Polyurethan-Systemen verwendeten, möglichen Ausgangsstoffe für die Schichten K1 und K2 umfassen alle in der PUR / PIR - Chemie verwendeten Rohstoffe, mit denen sich sinnvollerweise, aus dem Stand der Technik bekannte Polyurethan - Schaummaterialien bilden lassen, aus denen Mehrschicht - Elemente hergestellt werden können.

Die Schichten K1 und K2 können sich dabei in ihrer chemischen Zusammensetzung und / oder in ihren physikalischen Eigenschaften unterscheiden. Daher ist es möglich, über die Zusammensetzung der einzelnen Schichten, ihre Dicke und ihre Abfolge die Eigenschaften des fertigen Mehrschicht - Elements einzustellen.

Beispielsweise können die Schichten K1 und K2 bei ansonsten gleicher chemischer Zusammensetzung mit einer unterschiedlichen Treibmittelmenge geschäumt sein, so dass sie unterschiedliche Dichten aufweisen. Hierüber können beispielsweise die Festigkeit und das Gewicht der Platte eingestellt werden.

Es ist möglich, die Schichten K1 und K2 in unterschiedlicher Weise zu additivieren, beispielsweise mit Flammschutzmitteln. Die geeignete Additivierung richtet sich nach der gewünschten Anwendung und ist dem Stand der Technik zu entnehmen. Auf diese Weise kann beispielsweise der Einsatz teurer oder auf bestimmte Eigenschaften sich negativ auswirkender Additive auf das notwendige Minimum reduziert werden.

Als Treibmittel für die geschäumten Polyurethan-Schichten K1 und K2 können Kohlenwasserstoffe, z. B. die Isomeren des Pentans oder Fluorkohlenwasserstoffe, z.B. HFC 245fa (1,1,1,3,3-Pentafluorpropan), HFC 365mfc (1,1,1,3,3-Pentafluorbutan) oder deren Mischungen mit HFC 227ea (Heptafluorpropan), verwendet werden. Es können auch verschiedene Treibmittelklassen kombiniert werden. Als dem aufschäumenden Reaktionsgemisch aus der Isocyanat- und der Polyolkomponente zugesetzte Co-Treibmittel können Wasser und/oder Ameisensäure oder andere organische Carbonsäuren eingesetzt werden. Als zusätzliche Treibgase können Kohlenstoffdioxid, Luft, Stickstoff und weitere Gase eingesetzt werden.

Ohne eine abschließende Aufstellung darzustellen, können den PUR / PIR-Reaktionsgemischen für die Polyurethan-Systeme PUR1 und PUR2 weiterhin Katalysatoren, Stabilisatoren und weitere Hilfs- und Zusatzstoffe zugesetzt werden.

Der Zusatz von Hilfs- und Zusatzstoffen, Katalysatoren und dergleichen zum Reaktionsgemisch kann vor oder während der Vermischung der Polyol- und Isocyanat-Komponenten zugeführt werden.

Die Polyurethan-Systeme PUR1 und PUR2 können in dem jeweiligen DTB-Verfahren beispielsweise mit wenigstens einer Breitschlitzdüse, mit einem Sprühkopf, mit einer ruhenden oder oszillierenden Gießharke oder einem Rakel oder einem anderen aus dem Stand der Technik bekannten Auftragsorgan aufgebracht werden.

Obere und untere Deckschicht des Mehrschicht-Elementes können aus demselben Material oder aus unterschiedlichen Materialien aufgebaut sein. Zur Bildung von Deckschichten können beispielsweise Metallbahnen oder Kunststoff- oder Papiermaterialien Verwendung finden.

Mit dem erfindungsgemäßen Verfahren ist es möglich, Mehrschicht-Elemente in einer Anlage direkt herzustellen. Hierbei besteht hohe Flexibilität in der Auswahl der Schichten und Einstellung der Schichtdicken, kombiniert mit einer präzisen und homogenen Herstellungsweise.

Die Erfindung betrifft weiterhin eine Vorrichtung zur Herstellung von mehrschichtigen Verbundelementen aus Polyurethan, welche mindestens aus einer unteren Deckschicht, einer oberen Deckschicht, aus einer geschäumten Kemschicht sowie aus einer über der Kemschicht liegenden Zwischenschicht und einer unter der Kemschicht liegenden Zwischenschicht aufgebaut sind, wobei die Zwischenschichten aus der Spaltung einer ersten geschäumten Kemschicht entstanden sind, umfassend
a) eine Doppelband-Transportanlage zur Herstellung eines Sandwich - Paneels S mindestens umfassend eine untere Deckschicht D1, eine obere Deckschicht D2 und eine geschäumte Polyurethan-Kernschicht K1,
b) eine Spalteinrichtung zur Trennung des Sandwich - Paneels S in zwei Schichten H1 und H2 durch eine Spaltung der Kemschicht K1 in zwei Schichten Z1 und Z2, und
c) eine sich anschließende Doppelband-Transportanlage zu Herstellung eines Mehrschicht-Elements M umfassend die Schichten H1, mindestens enthaltend die Schichten D1 und Z1, sowie H2, mindestens enthaltend die Schichten D2 und Z2, sowie eine dazwischenliegende, geschäumte Polyurethan-Kernschicht K2.

Weitere, die Erfindung verbessernde Maßnahmen werden nachstehend gemeinsam mit der Beschreibung eines bevorzugten Ausführungsbeispiels der Erfindung anhand der Figuren näher dargestellt.

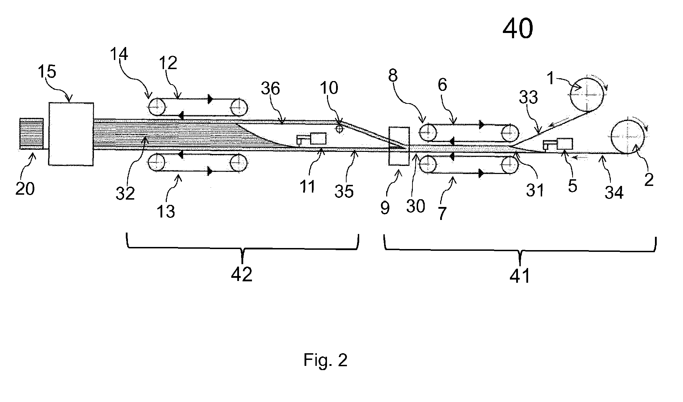

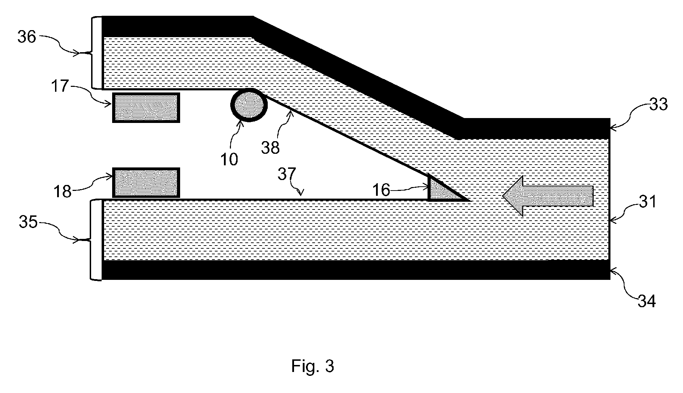

Es zeigen:
Figur 1a) Beispielhafter Aufbau eines Sandwich-Paneels S
   Es bedeuten:
   - D1: untere Deckschicht
   - D2: obere Deckschicht
   - K1: geschäumte erste Polyurethan-Kernschicht
Figur 1b) Beispielhafter Aufbau eines Mehrschicht - Elements M
   - D1: untere Deckschicht
   - D2: obere Deckschicht
   - H1: untere Schicht des Sandwich-Paneels S nach Spaltung
   - H2: obere Schicht des Sandwich-Paneels S nach Spaltung
   - Z1: untere Schicht des Polyurethankerns K1 nach Spaltung
   - Z2: obere Schicht des Polyurethankerns K1 nach Spaltung
   - K2: geschäumte zweite Polyurethan-Kernschicht
   - M: Polyurethan-Mehrschicht-Element
Figur 2 eine erfindungsgemäße Vorrichtung (40) zur Herstellung von Polyurethan-Mehrschicht - Elementen
   Hierin bedeuten:
   - 1: obere Deckschichtrolle
   - 2: untere Deckschichtrolle
   - 5: Mischkopf zum Auftrag des Polyurethan-Systems PUR1
   - 6: Obertransportband
   - 7: Untertransportband
   - 8: Doppelband-Transportanlage
   - 9: Spaltvorrichtung
   - 10: Umlenkrolle
   - 11: Mischkopf zum Auftrag des Polyurethan-Systems PUR2
   - 12: Obertransportband
   - 13: Untertransportband
   - 14: Doppelband-Transportanlage
   - 15: Ablängvorrichtung
   - 20: Mehrschicht-Element M
   - 30: Sandwich-Paneel S
   - 31: geschäumte Polyurethan-Kernschicht K1
   - 32: geschäumte Polyurethan-Kernschicht K2
   - 33: obere Deckschicht D2
   - 34: untere Deckschicht D1
   - 35: untere Schicht H1 des Sandwich-Paneels S nach Spaltung
   - 36: obere Schicht H2 des Sandwich-Paneels S nach Spaltung
Figur 3 Detailzeichnung der Spaltvorrichtung
   Hierin bedeuten:
   - 10: Umlenkrolle
   - 16: Spaltmesser
   - 17: obere Staubabsaugung
   - 18: untere Staubabsaugung
   - 31: geschäumte Polyurethan-Kernschicht K1
   - 33: obere Deckschicht D2
   - 34: untere Deckschicht D1
   - 35: untere Schicht H1 des Sandwich-Paneels S nach Spaltung
   - 36: obere Schicht H2 des Sandwich-Paneels S nach Spaltung
   - 37: untere Schicht Z1 des Polyurethankerns K1 nach Spaltung
   - 38: obere Schicht Z2 des Polyurethankerns K1 nach Spaltung

Figur 1 zeigt den beispielhaften Aufbau eines Mehrschicht - Elementes M, wie es mit dem erfindungsgemäßen Verfahren hergestellt werden kann, und dessen Vorstufe, eine Ausführungsform des Sandwich - Elements S. Das Sandwich - Element (Figur 1a) umfasst eine untere Deckschicht D1 und eine obere Deckschicht D2 sowie eine dazwischenliegende, erste geschäumte Polyurethankernschicht K1. Das nach dem erfindungsgemäßen Verfahren hergestellte Mehrschicht - Element M (Figur 1b) verfügt über eine zweite geschäumte Polyurethankernschicht K2, welche von den zwei Polyurethanschaum-Schichten Z1 und Z2 umgeben ist, die durch Spaltung des Sandwich-Paneels S aus der geschäumten ersten Polyurethankernschicht K1 entstanden sind. Die Deckschichten D1 und D2 entsprechen den Deckschichten des zunächst hergestellten Sandwich - Elements S. Die Schichten H1 und H2umfassen jeweils die Schichten D1 und Z1 bzw. D2 und Z2.

Figur 2 zeigt eine erfindungsgemäße Vorrichtung zur Herstellung von Polyurethan-Mehrschicht - Elementen. Hierbei sind die wichtigsten Anlagenkomponenten die beiden Doppelband-Transportanlagen 8 und 14 und die Spaltvorrichtung 9. Als erstes werden die beiden Deckschichten 33 und 34 von den jeweiligen Rollen 1 und 2 so gefördert, dass ein Spalt zwischen ihnen verläuft. Das Polyurethangemisch PUR1 wird mit Hilfe des Mischkopfs 5 auf die untere Deckschicht D1 aufgetragen. Beim Durchlaufen der Doppelband-Transportanlage 8, bestehend aus oberem Transportband 6 und unterem Transportband 7, welche in Pfeilrichtung rotieren, schäumt das Polyurethan-System PUR1 zur Schicht K1 auf und es entsteht das Sandwich-Element S. Durch die sich anschließende Spaltvorrichtung 9 wird das Sandwich-Element S in der Kemschicht K1 in zwei Schichten geteilt (H1 und H2), welche jeweils eine Deckschicht und eine Teilschicht der Kemschicht K1 umfassen. Durch eine Umlenkrolle 10 wird die obere Schicht 36 von der unteren Schicht 35 so weit entfernt, dass zwischen den beiden Schichten H1 und H2 ein Spalt entsteht und die Schicht H2 über den Mischkopf 11 geführt wird. Die Führung und Umlenkung kann ebenfalls durch Leitbleche oder andere technische Lösungen erfolgen. Nach der Umlenkrolle 10 werden die beiden Schichten parallel geführt in dem Abstand, welcher der Soll-Dicke der Polyurethan-Kernschicht K2 entspricht. Der Mischkopf 11 trägt das Polyurethan-System PUR2 auf. Während des Durchlaufens der zweiten Doppelband-Transportanlage 14, bestehend aus oberem Transportband 12 und unterem Transportband 13 schäumt die Reaktionsmischung aus dem System PUR2 zu dem Polyurethanschaum K2 auf. Nach Ablängung (Vereinzelung) in der Ablängvorrichtung 15 wird das Mehrschicht-Element M erhalten.

Nicht gezeigt, jedoch selbstverständlich zu allen erfindungsgemäßen Vorrichtungen gehörend sind die entsprechenden Vorlagebehälter der jeweiligen Reaktionskomponenten, unter anderem der Isocyanat- und der Polyolkomponente(n), die Dosiereinrichtungen sowie Leitungen zur Dosierung, zu den Mischköpfen und die entsprechenden Steuerungseinrichtungen.

Figur 3 zeigt die Details der Spaltvorrichtung 9. Zur Spaltung des Polyurethanschaumes K1 wird ein Spaltmesser 16 verwendet. Die obere Schicht des Sandwich - Elements wird dann durch die Umlenkrolle 10 nach oben geführt. Durch zwei Staubabsaugungen, oben 17 und unten 18, wird die Oberfläche der beiden Schaumschichten (H1 und H2) gereinigt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehende Merkmale und/oder Vorteile, einschließlich konstruktiver Einzelheiten oder räumlicher Anordnungen, können sowohl für sich als auch in den verschiedensten Kombinationen erfindungswesentlich sein.

## Patentansprüche

1. Verfahren zur kontinuierlichen Herstellung eines Mehrschicht - Elements (M) enthaltend eine obere Deckschicht (D2) und eine untere Deckschicht (D1) und mindestens drei dazwischen liegende, verbundene Schichten aus geschäumtem Polyurethan, bei dem
a) in einem ersten Schritt ein Sandwich-Paneel (S), enthaltend eine obere Deckschicht (D2), eine untere Deckschicht (D1) und mindestens eine dazwischenliegende geschäumte erste Kemschicht (K1) hergestellt wird,
b) in einem zweiten, an den Schritt a) anschließenden Schritt das Sandwich-Paneels in zwei Schichten (H1 und H2) getrennt wird durch eine Spaltung der ersten Kemschicht (K1), und
c) in einem dritten Schritt
ca) die beiden Schichten H1 und H2 als neue Deckschichten in eine sich anschließende Doppelband-Transportanlage eingeführt werden und
cb) ein Polyurethan-System (PUR2) von oben auf die Oberseite der unteren Schicht (H1) aufgetragen wird, und
cc) anschließend die beiden Schichten H1 und H2 mit dem Polyurethan-System in einer Formstrecke geführt werden, in der die Dicke des Polyurethan-Mehrschicht-Elements eingestellt wird und in der das Polyurethan-System PUR2 zu einer geschäumten zweiten Kemschicht (K2) ausreagiert,
d) anschließend das ausreagierte Mehrschicht-Element M abgezogen und abgelängt wird.

2. Verfahren gemäß Anspruch 1, wobei die Herstellung des Sandwich-Paneels S in Schritt a) die Schritte umfasst, dass
aa) die beiden Deckschichten D1 und D2 kontinuierlich in Längsrichtung gefördert werden, so dass zwischen den Deckschichten ein in Längsrichtung der Deckschichten ausgedehnter Spalt entsteht, und
ab) ein Polyurethan-System PUR1 von oben auf die Oberseite der unteren Deckschicht aufgetragen wird, und
ac) anschließend die Deckschichten mit dem Polyurethan-System PUR1 in einer Formstrecke geführt werden, in der die Dicke des Polyurethan-Sandwich-Paneels S eingestellt wird und in der das Polyurethan-System PUR1 zu einer ersten geschäumten Kemschicht K1 ausreagiert, und das ausreagierte Paneel S abgezogen und in die Spalteinrichtung geführt wird.

3. Vorrichtung (40) zur kontinuierlichen Herstellung eines Mehrschicht - Elements (M) enthaltend eine obere Deckschicht (D2) und eine untere Deckschicht (D1), eine geschäumte Kemschicht (K2) sowie eine über der Kemschicht liegende Zwischenschicht (Z2) und einer unter der Kemschicht liegende Zwischenschicht (Z1), wobei die Zwischenschichten aus der Spaltung einer ersten geschäumten Kemschicht (K1) entstanden sind, umfassend
a) einer Vorrichtung (41) zur Herstellung eines Sandwich - Paneels S (30), enthaltend eine untere Deckschicht D1 (34), eine obere Deckschicht D2 (33) und eine geschäumte Polyurethan-Kernschicht K1 (31), umfassend eine obere Deckschichtrolle (1) zur Zuführung der oberen Deckschicht D2, eine untere Deckschichtrolle (2) zur Zuführung der unteren Deckschicht D1, einen Mischkopf zum Auftrag des Polyurethan-Systems PUR1 (5), eine Doppelband-Transportanlage (8) umfassend ein umlaufendes Obertransportband (6) und Untertransportband (7)
b) eine Spaltvorrichtung (9) zur Spaltung des Sandwich - Paneels (30) in der Kemschicht K1 (31) in eine untere Schicht H1 (35), mindestens enthaltend die Deckschicht D1 und eine Teilschicht Z1 der Kemschicht K1 (31), und eine obere Schicht H2 (36), mindestens enthaltend die Deckschicht D2 und eine weitere Teilschicht Z2 der Kemschicht K1 (31),
c) eine sich in Transportrichtung anschließende Vorrichtung (42) zur Einführung einer Polyurethan-Kernschicht K2 (32), umfassend eine Umlenkrolle (10) zur Aufweitung der Schichten H1 (35) und H2 (36), einen Mischkopf zum Auftrag des Polyurethan-Systems PUR2 (11), eine Doppelband-Transportanlage (14) umfassend ein umlaufendes Obertransportband (12) und Untertransportband (13), sowie
d) eine sich anschließende Ablängvorrichtung (15) zur Herstellung eines Mehrschicht-Elements M (20), umfassend die Schicht H1 (35), die Schicht H2 (36), sowie die dazwischenliegende, geschäumte Polyurethan-Kernschicht K2 (32).
